# EUROPEAN PATENT APPLICATION

(11) **EP 4 782 412 A1**
(43) Date of publication of application: **29.07.2026**
(21) Application number: 24881632.4
(22) Date of filing: 23.10.2024
(51) Int. Cl.: C03B 23/035, C03B 23/025

(54) **MOLD, METHOD AND DEVICE FOR FORMING GLASS PLATE**

(30) Priority: 23.10.2023 CN 202311378302
(71) Applicant: Fuyao Glass Industry Group Co., Ltd., Fuqing, Fujian 350300 (CN)
(72) Inventor: CHI, Kezhang, Fuzhou, Fujian 350300 (CN); HE, Jiangxing, Fuzhou, Fujian 350300 (CN); LIU, Fu, Fuzhou, Fujian 350300 (CN); CHEN, Weixuan, Fuzhou, Fujian 350300 (CN); CHEN, Bizhu, Fuzhou, Fujian 350300 (CN); CHEN, Hexing, Fuzhou, Fujian 350300 (CN); ZENG, Guohai, Fuzhou, Fujian 350300 (CN); GUAN, Guoqiang, Fuzhou, Fujian 350300 (CN)
(74) Representative: Patentanwälte Olbricht Buchhold Keulertz
(86) International application number: PCT/CN2024/126648
(87) International publication number: WO 2025/087268

(57) **Abstract**

The present disclosure discloses a mold and method for molding a glass plate, and a device for molding a glass plate. The mold for molding a glass plate includes: an upper mold having an upper molding surface, at least one pressure blowing cavity and at least one upper suction cavity, wherein the upper molding surface is provided with pressure blowing holes in communication with the pressure blowing cavity and upper suction holes in communication with the upper suction cavity; a first lower mold having a first lower molding surface; and a second lower mold having a second lower molding surface and a lower suction cavity, wherein the second lower molding surface is provided with lower suction holes in communication with the lower suction cavity. By means of the present disclosure, the preliminary molding of the glass plate under the action of its own gravity can be achieved first, then the glass plate is transferred onto the second lower molding surface, and simultaneously the final molding of the glass plate is achieved by utilizing the suction action of the lower suction cavity and the lower suction cavity as well as the pressure blowing action of the pressure blowing cavity, which ensures that the glass plate can well conform to both the upper molding surface and the second lower molding surface without generating a pan-shaped or S-shaped deformation. Therefore, the simultaneous molding of a plurality of glass plates can be achieved with high molding precision and good molding stability.

## Description

### CROSS REFERENCE TO RELATED APPLICATION

The present disclosure claims the priority of the Chinese invention patent application with an application number of 202311378302.8 and filed on October 23, 2023, the entire content of which is incorporated herein by reference.

### TECHNICAL FIELD

The present disclosure relates to the technical field of glass plate processing, and particularly, to a mold and method for molding a glass plate, and a device for molding a glass plate.

### BACKGROUND

A front windshield glass plate is typically a laminated glass plate formed by bonding two or more glass plates together with one or more layers of adhesive materials. Conventional molding processes for laminated glass plates are generally divided into two categories.

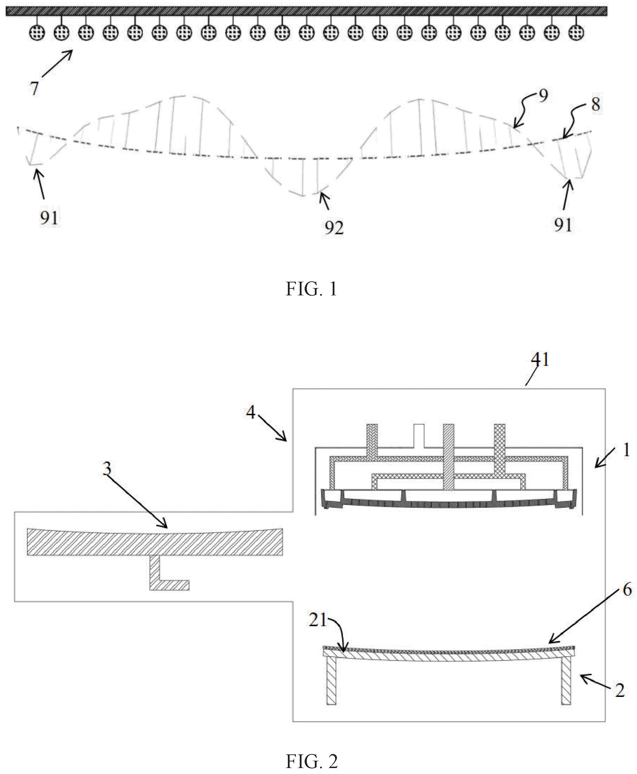

One category is gravity molding. As illustrated in FIG. 1, the steps of this molding process are as follows: a plurality of glass plates are stacked together and placed on a molding mold matching the final curved shape of the glass plates; the molding mold is mounted on a conveying carriage, and as the conveying carriage moves through a bending furnace, the plurality of glass plates are heated by heating furnace wires 7 above to at least their softening temperature, bent into the final shape under their own gravity, and finally transferred to a laminating procedure for bonding. The advantage of this process is that the plurality of glass plates are molded synchronously, thus ensuring a good fit therebetween. However, the disadvantage is that a preset molding surface 8 of the glass plates is a concave curved surface, yet affected by the shape of the glass plate, the mold and a gravity distribution, such as a first deformation area 91 caused by a supporting force of the mold and a second deformation area 92 caused by gravity, thus making the glass plate highly prone to generating an actual molding surface 9 that is "pan-shaped" or "S-shaped".

The other category is single-piece press molding. The steps of this molding process are as follows: a single glass plate is heated and softened in a heating furnace by the rotation of ceramic rollers, then conveyed to a molding section, and finally press-molded by counterpressing of an upper convex mold and a lower concave mold; a plurality of glass plates that have each undergone the compression procedure are then stacked together and transferred to a laminating procedure for bonding. This process has many advantages, such as smooth profile transition, minimal surface fluctuation, high production efficiency and low cost. But the disadvantage is that the plurality of glass plates are molded separately, resulting in poor matching therebetween, especially when there is a significant difference in heat absorption characteristics among the glass plates.

### SUMMARY

An object of the present disclosure is to provide a mold and method for molding a glass plate, and a device for molding a glass plate, so as to solve the technical problems existing in current glass plates.

The above object of the present disclosure can be achieved by the following technical solutions.

The present disclosure provides a mold for molding a glass plate, including: an upper mold having an upper molding surface, at least one pressure blowing cavity and at least one upper suction cavity, wherein the upper molding surface is provided with pressure blowing holes in communication with the pressure blowing cavity and upper suction holes in communication with the upper suction cavity; a first lower mold having a first lower molding surface; a second lower mold having a second lower molding surface and a lower suction cavity, wherein the second lower molding surface is provided with lower suction holes in communication with the lower suction cavity.

In an embodiment of the present disclosure, the mold for molding the glass plate has a first operating state, a second operating state and a third operating state, wherein in the first operating state, a glass plate is placed on the first lower molding surface; in the second operating state, the upper molding surface at least partially conforms to an upper surface of the glass plate, and the upper suction cavity is in a suction state; and in the third operating state, the glass plate is placed on the second lower molding surface and positioned below the upper molding surface, the upper suction cavity and the lower suction cavity are both in a suction state, and the pressure blowing cavity is in a pressure blowing state.

In an embodiment of the present disclosure, the upper molding surface includes a first upper molding surface, wherein the first upper molding surface is capable of conforming to an edge region of an upper surface of the glass plate, and the upper suction holes are provided on the first upper molding surface.

In an embodiment of the present disclosure, the upper molding surface further includes a second upper molding surface, wherein the second upper molding surface is positioned on an inner side of the first upper molding surface; the pressure blowing holes are provided on the second upper molding surface, wherein the second upper molding surface is spaced apart from an upper surface of the glass plate, such that a gap space between the second upper molding surface and the upper surface of the glass plate forms a pressure blowing space.

In an embodiment of the present disclosure, a distance between the second upper molding surface and the upper surface of the glass plate is greater than 0 and not more than 200 mm.

In an embodiment of the present disclosure, the first lower molding surface conforms to an edge region of a preset molded lower surface of the glass plate, a cavity is provided on an inner side of the first lower molding surface; and the second lower molding surface is capable of conforming to the entire preset molded lower surface of the glass plate.

In an embodiment of the present disclosure, the upper mold further has a skirt structure, wherein the skirt structure has an outer suction cavity, and in a state where the glass plate conforms to the upper molding surface, the glass plate is at least partially positioned within the outer suction cavity, such that an annular space between the skirt structure and the glass plate forms an outer suction passage.

In an embodiment of the present disclosure, a distance between a bottom end of the skirt structure and the first upper molding surface is greater than 0 and not more than 100 mm.

In an embodiment of the present disclosure, the number of the pressure blowing cavities is two, two pressure blowing cavities include a first pressure blowing cavity and a second pressure blowing cavity, and a plurality of the pressure blowing holes include a plurality of first pressure blowing holes and a plurality of second pressure blowing holes, wherein the plurality of first pressure blowing holes are in communication with the first pressure blowing cavity and are positioned above a middle region of the glass plate, and the plurality of second pressure blowing holes are in communication with the second pressure blowing cavity and are positioned above an inner region of the edge region of the glass plate.

In an embodiment of the present disclosure, a preset deformation range of the middle region is larger than that of the inner region; a pressure blowing force of the first pressure blowing cavity is higher than that of the second pressure blowing cavity; and/or a pressure blowing time of the first pressure blowing cavity is longer than that of the second pressure blowing cavity; and/or a distribution density of the first pressure blowing holes is higher than that of the second pressure blowing holes.

In an embodiment of the present disclosure, the upper mold further includes a housing and a sealing plate, an upper surface of the housing is provided with a plurality of partitioned inner cavities and openings of the respective inner cavities, the plurality of partitioned inner cavities constitute at least one upper suction cavity and at least one pressure blowing cavity, and the sealing plate seals the openings; a lower surface of the housing is provided with the upper molding surface; wherein the skirt structure is integrally formed on the housing, and an air suction duct on the housing, which is in communication with the outer suction cavity, constitutes the outer suction passage; or, the skirt structure is provided separately from and covers the outside of the housing.

The present disclosure further provides a method for molding a glass plate, wherein the method for molding a glass plate uses the aforementioned mold for molding a glass plate, and includes the following steps: placing a glass plate on the first lower molding surface, and heating the glass plate until the glass plate is softened; conforming the upper molding surface to the glass plate; holding, by the upper mold, the glass plate by suction under a suction action of the suction cavity, and transferring the glass plate onto the second lower molding surface; performing final molding of the glass plate by cooperation of the upper mold and the second lower mold.

In an embodiment of the present disclosure, the performing final molding of the glass plate by cooperation of the upper mold and the second lower mold includes the following steps: sucking, by the lower suction cavity and the upper suction cavity, the glass plate through the lower suction holes and the upper suction holes, and applying, by the pressure blowing cavity, pressure blowing to the glass plate through the pressure blowing holes, thereby achieving the final molding of the glass plate; or during the process of conforming the glass plate to the second lower molding surface, sucking and discharging air between the glass plate and the second lower mold through the lower suction cavity until the glass plate fully conforms to the second lower molding surface; injecting gas into the lower suction cavity to convert the lower suction cavity into a lower pressure blowing cavity, and meanwhile, in cooperation with a suction action of the upper suction cavity, achieving the final molding of the glass plate under an action of vacuum suction from above and pressure blowing from below on the glass plate.

In an embodiment of the present disclosure, the method for molding a glass plate further includes: setting the number, distribution positions, pressure blowing force and pressure blowing time of the pressure blowing cavities according to preset deformation ranges of a plurality of regions on the glass plate.

In an embodiment of the present disclosure, the pressure blowing time is 0.5 seconds to 5 seconds.

The present disclosure further provides a device for molding a glass plate, including a furnace body and the aforementioned mold for molding a glass plate, wherein the mold for molding a glass plate is capable of molding the glass plate in the furnace body.

In an embodiment of the present disclosure, the device for molding a glass plate further includes a conveying mechanism, wherein the conveying mechanism is capable of driving the first lower mold to move along a conveying direction in the furnace body.

In an embodiment of the present disclosure, the furnace body has a heating section, a molding section, an annealing section and a cooling section arranged along the conveying direction, and the upper mold and the second lower mold are provided in the molding section.

In an embodiment of the present disclosure, the device for molding a glass plate further includes a driving mechanism, wherein the driving mechanism includes a first driving structure and a second driving structure, the upper mold is mounted in the furnace body via the first driving structure, the second lower mold is mounted in the furnace body via the second driving structure, the first driving structure is capable of driving the upper mold to move along a vertical direction, and the second driving structure is capable of driving the second lower mold to move along a horizontal direction.

In an embodiment of the present disclosure, the device for molding a glass plate further includes a control mechanism, wherein the control mechanism includes at least one upper suction control structure, at least one lower suction control structure, at least one pressure blowing control structure and a driving control structure, wherein the at least one upper suction control structures is in communication with the at least one upper suction cavities, the at least one lower suction control structures is in communication with the at least one lower suction cavities, the at least one pressure blowing control structures is in communication with the at least one pressure blowing cavities, and the driving control structure is connected to the driving mechanism.

The present disclosure achieves the following characteristics and benefits.

By utilizing the mold and method for molding a glass plate, and the device for molding a glass plate of the present disclosure, the glass plate can first be placed on the first lower molding surface of the first lower mold for heating and softening to achieve the preliminary molding of the glass plate under the action of its own gravity; the preliminarily molded glass plate can then be held by suction via the suction cavity of the upper mold and transferred onto the second lower molding surface of the second lower mold. Thereby, the final molding of the glass plate can be achieved by simultaneously utilizing the suction action of the lower suction cavity and the lower suction cavity and the pressure blowing action of the pressure blowing cavity, which ensures that the glass plate well conforms to both the upper molding surface and the second lower molding surface without generating a pan-shaped or S-shaped deformation. Therefore, when two or more glass plates are used, simultaneous molding of a plurality of glass plates can be realized with high molding precision and good molding stability.

### BRIEF DESCRIPTION OF DRAWINGS

In order to more clearly explain the technical solutions in the embodiments of the present disclosure, the drawings required in the description of the embodiments will be briefly introduced below. Obviously, the drawings involved in the following description only illustrate some embodiments of the present disclosure, and those of ordinary skill in the art can obtain other drawings from these drawings without paying any creative effort.
FIG. 1 illustrates a schematic diagram of deformation of a glass plate during gravity molding in the prior art.
FIG. 2 illustrates a structural diagram of a mold for molding a glass plate in a first operating state in the present disclosure.
FIG. 3 illustrates a structural diagram of a mold for molding a glass plate in a second operating state in the present disclosure.
FIG. 4 illustrates a structural diagram of a mold for molding a glass plate in a third operating state in the present disclosure.
FIG. 5 illustrates a structural diagram of a first lower mold in the present disclosure.
FIG. 6 illustrates a structural diagram of an upper surface of a second lower mold in the present disclosure.
FIG. 7 illustrates a structural diagram of a lower surface of a second lower mold in the present disclosure.
FIG. 8 illustrates a structural diagram of an upper mold according to an embodiment of the present disclosure.
FIG. 9 illustrates a structural diagram of a lower surface of an upper mold according to an embodiment of the present disclosure.
FIG. 10 illustrates a structural diagram of an upper surface of a housing according to an embodiment of the present disclosure.
FIG. 11 illustrates a flowchart of molding a glass plate according to an embodiment of the present disclosure.
FIG. 12 illustrates a structural diagram of an upper mold according to another embodiment of the present disclosure.
FIG. 13 illustrates a structural diagram of a lower surface of an upper mold according to another embodiment of the present disclosure.
FIG. 14 illustrates a structural diagram of an upper surface of a housing according to another embodiment of the present disclosure.
FIG. 15 illustrates a flowchart of molding a glass plate according to another embodiment of the present disclosure.

### DETAILED DESCRIPTION

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments in the present disclosure, all other embodiments obtained by those of ordinary skill in the art without paying any creative effort should fall within the protection scope of the present disclosure.

### Embodiment 1

As illustrated in FIGS. 2 to 4, the present disclosure provides a mold for molding a glass plate, including: an upper mold 1 having an upper molding surface 11, at least one pressure blowing cavity 12 and at least one upper suction cavity 13, wherein the upper molding surface 11 is provided with pressure blowing holes 14 in communication with the pressure blowing cavity 12 and upper suction holes 15 in communication with the upper suction cavity 13; a first lower mold 2 having a first lower molding surface 21; and a second lower mold 3 having a second lower molding surface 31 and a lower suction cavity 32, wherein the second lower molding surface 31 is provided with lower suction holes in communication with the lower suction cavity 32.

The mold for molding a glass plate of the present disclosure can utilize the cooperation of the upper mold 1, the first lower mold 2 and the second lower mold 3 to form a plurality of operating states. For example, in the embodiment of the present disclosure, the mold for molding a glass plate has a first operating state, a second operating state and a third operating state. In the first operating state, a glass plate 6 is placed on the first lower molding surface 21; in the second operating state, the upper molding surface 11 at least partially conforms to the glass plate 6, and the upper suction cavity 13 is in a suction state; in the third operating state, the glass plate 6 is placed on the second lower molding surface 31 and positioned below the upper molding surface 11, the upper suction cavity 13 and the lower suction cavity 32 are both in a suction state, and the pressure blowing cavity 12 is in a pressure blowing state. Herein, the glass plate 6 may be a single glass plate, or may include two or more glass plates stacked on each other.

By utilizing the mold for molding a glass plate of the present disclosure, the first operating state is first formed, that is, the glass plate 6 is first placed on the first lower molding surface 21 of the first lower mold 2 for heating and softening to achieve the preliminary molding of the glass plate 6 under the action of its own gravity. The second operating state is then formed, utilizing the suction cavity of the upper mold 1 to hold the preliminarily formed glass plate 6 by suction and transfers the same to the second lower molding surface 31 of the second lower mold 3, so as to form the third operating state. Thereby, the final molding of the glass plate 6 can be achieved by simultaneously utilizing the suction action of the lower suction cavity 32 and the upper suction cavity 13 as well as the pressure blowing action of the pressure blowing cavity 12, which ensures that the glass plate 6 can well conforms to both the upper molding surface 11 and the second lower molding surface 31 without generating a pan-shaped or S-shaped deformation. Therefore, when two or more glass plates 6 are used, simultaneous molding of a plurality of glass plates 6 can be realized with high molding precision and good molding stability.

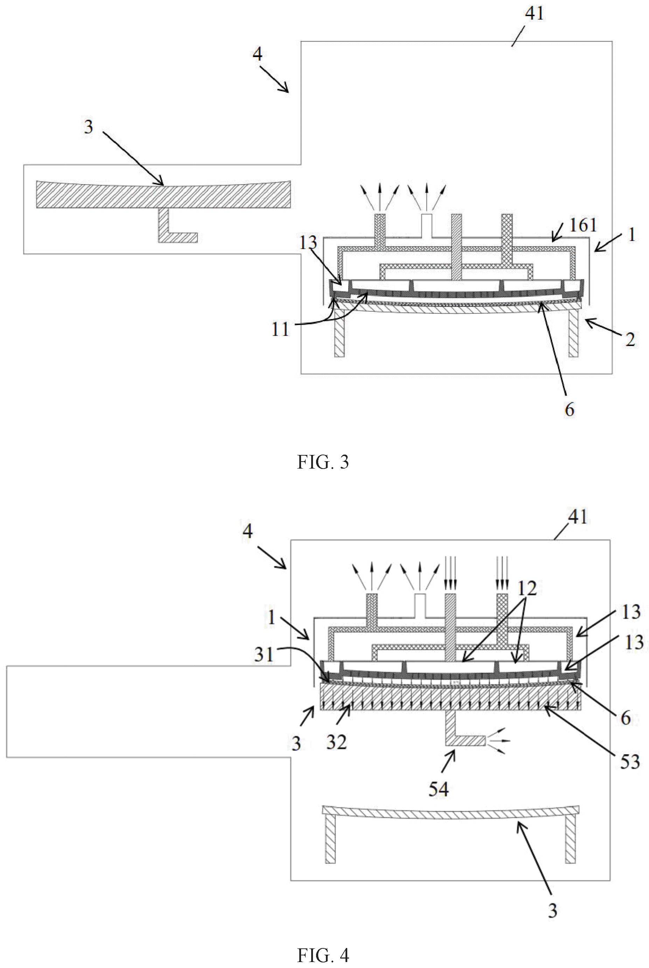

As illustrated in FIGS. 2 and 4, the first lower molding surface 21 and the second lower molding surface 31 are designed according to a preset molded lower surface of the glass plate 6, i.e., a preset shape of the lower surface, such that the glass plate 6 can achieve the preliminary molding when conforming to the first lower molding surface 21, and achieve the final molding when conforming to the second lower molding surface 31, with the finally molded lower surface matches the preset molded lower surface. As illustrated in FIG. 3, the upper molding surface 11 is designed according to a preset molded upper surface of the glass plate 6, i.e., a preset shape of the upper surface, such that the glass plate 6 conforms to the upper molding surface 11, with the finally molded upper surface matching the preset molded upper surface. In the embodiment of the present disclosure, the preset molded upper surface of the glass plate 6 is generally a concave curved surface recessed downward, and the preset molded lower surface of the glass plate 6 is generally a convex curved surface protruding downward.

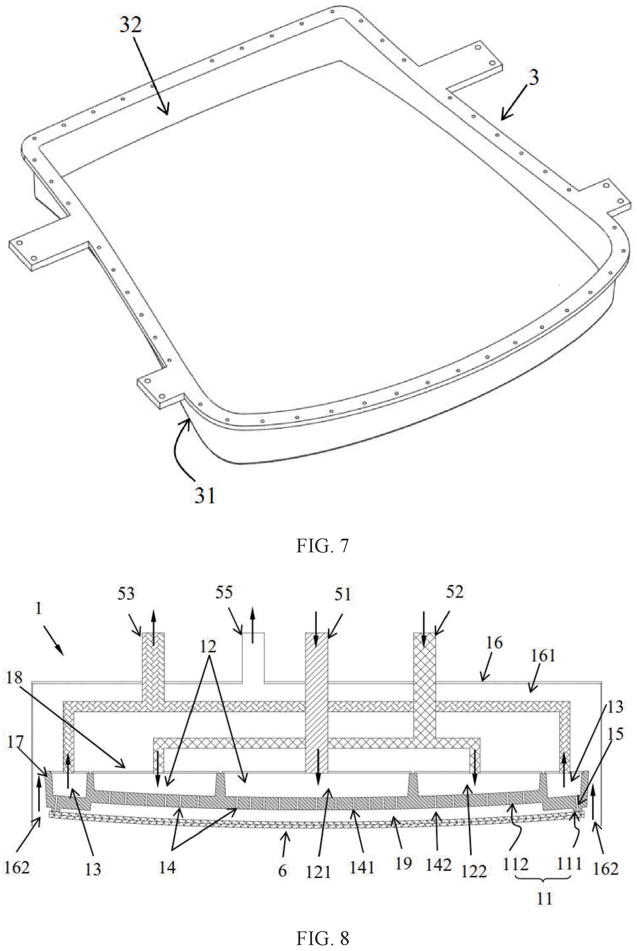

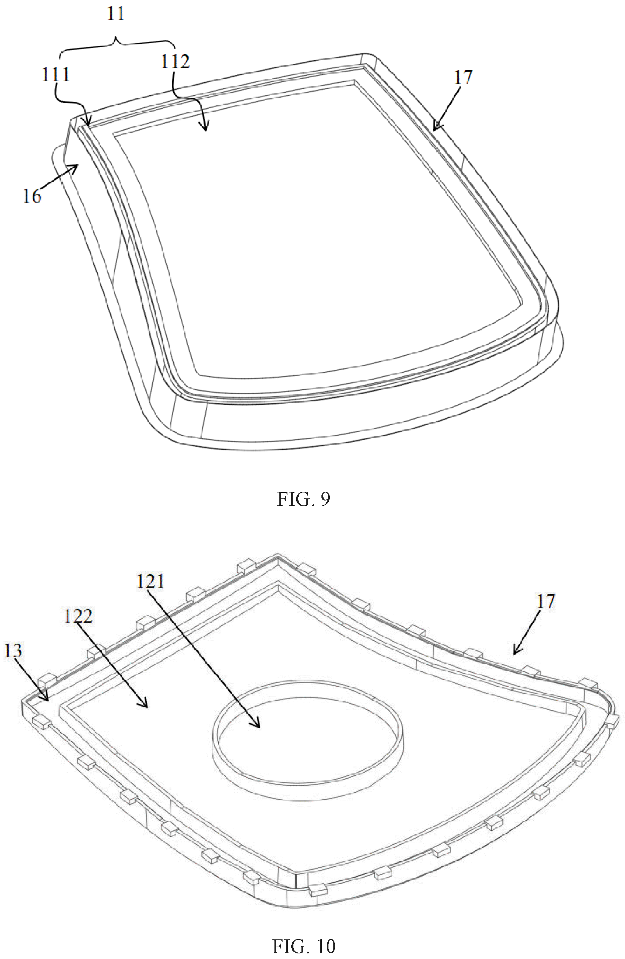

It should be noted that in the embodiment of the present disclosure, the glass plate 6 is divided into an edge region, a middle region and an inner region. That is, according to a preset deformation range of different regions on the glass plate 6, the regions on the glass plate 6 except the edge region are divided into the middle region with a larger preset deformation range (i.e., a larger depression depth), and the inner region with a smaller preset deformation range (i.e., a smaller depression depth) which is positioned between the middle region and the edge region, as specifically illustrated in FIGS. 8 and 10.

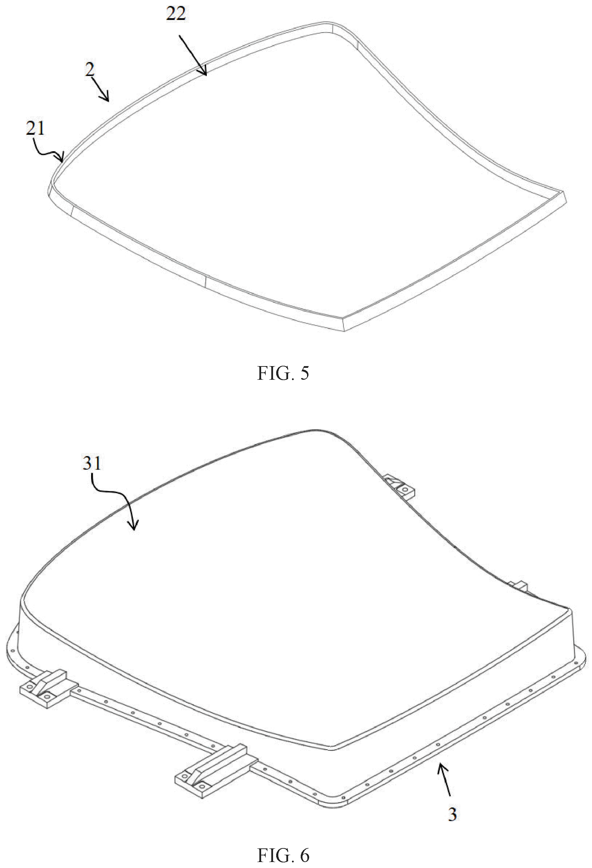

As illustrated in FIGS. 2 and 5, in the embodiment of the present disclosure, the first lower molding surface 21 conforms to the edge region of the lower surface of the glass plate 6, and a cavity 22 is provided on an inner side of the first lower molding surface 21. The first lower molding surface 21 is used to support the edge region of the glass plate 6, and the inner region and the middle region of the glass plate 6 are in a suspended state. Therefore, after the glass plate 6 is heated and softened, the inner region and the middle region of the glass plate 6 can be recessed downward under the action of its own gravity to achieve preliminary molding. Specifically, the first lower molding surface 21 is generally of an annular concave curved surface structure; an outer ring of the first lower molding surface 21 may extend beyond an outer contour of the glass plate 6 by within 5 mm, or an outer ring of the first lower molding surface 21 may not extend beyond the outer contour of the glass plate 6 and be within 20 mm from the outer contour thereof.

As illustrated in FIGS. 4, 6 and 7, an area of the second lower molding surface 31 is greater than or equal to that of the preset molded lower surface of the glass plate 6, such that the entire lower surface of the glass plate 6 can conform to the second lower molding surface 31, thereby making the finally formed lower surface of the glass plate 6 match the preset molded lower surface. Specifically, the lower suction cavity 32 may be connected to a vacuum pump via a lower suction control structure 54, and the suction force and the suction time of the lower suction cavity 32 can be controlled by the lower suction control structure 54. The lower suction holes (not illustrated) are through-hole structures opened in the second lower molding surface 31, and their specific structure and distribution characteristics may refer to those of the pressure blowing holes 14 described below, which will not be elaborated here.

As illustrated in FIGS. 5, 6 and 7, in the embodiment of the present disclosure, the upper molding surface 11 includes a first upper molding surface 111, which can conform to the edge region of the upper surface of the glass plate 6, and the upper suction holes 15 are provided on the first upper molding surface 111. With the edge region of the glass plate 6 supported and shaped by the first lower molding surface 21, the first upper molding surface 111 can first press the glass plate 6 to achieve better conforming to the edge region of the upper surface of the glass plate 6 by providing the first upper molding surface 111 and arranging the upper suction holes 15 thereon. This thus ensures that the glass plate 6 can be stably held by suction and then transferred under the suction action of the upper suction cavity 13, while preventing the edge region of the glass plate 6 from being deformed during the transfer, which is conducive to improving the molding stability of the edge region of the glass plate 6. Specifically, the upper suction cavity 13 is generally an annular cavity corresponding to the preset molded edge region of the glass plate 6.

As illustrated in FIGS. 8 and 9, in the embodiment of the present disclosure, the upper molding surface 11 further includes a second upper molding surface 112, which is positioned on an inner side of the first upper molding surface 111. The pressure blowing holes 14 are provided on the second upper molding surface 112 that is spaced apart from the upper surface of the glass plate 6, such that a gap between the second upper molding surface 112 and the upper surface of the glass plate 6 forms a pressure blowing space 19. By providing the pressure blowing space 19, the blowing gas can first flow into the pressure blowing space 19 from the pressure blowing cavity 12 through the pressure blowing holes 14 and then applies pressure blowing to the glass plate 6, wherein a contact area between the pressure blowing gas and the glass plate 6 is larger, thereby enabling more uniform pressure blowing of the corresponding parts of the glass plate 6.

Specifically, an excessively large pressure blowing space 19 will affect the pressure blowing effect. Therefore, a distance between the second upper molding surface 112 and the upper surface of the glass plate 6 is exemplarily greater than 0 and not more than 200 mm, and may specifically be 200 mm, 180 mm, 160 mm, 140 mm, 120 mm, 100 mm, 80 mm, 60 mm, 40 mm, 20 mm, 10 mm, 5 mm, etc. The second upper molding surface 112 has the same shape as the inner region of the preset molded upper surface of the glass plate 6.

As illustrated in FIGS. 8 and 9, in the embodiment of the present disclosure, the upper mold 1 further has a skirt structure 16, wherein the skirt structure 16 has an outer suction cavity 161. In a state where the glass plate 6 conforms to the upper molding surface 11, the glass plate 6 is at least partially positioned within the outer suction cavity 161, such that an annular space between the skirt structure 16 and the glass plate 6 forms an outer suction passage 162. By providing the skirt structure 16 with the outer suction cavity 161, the annular space between the skirt structure 16 and the glass plate 6 forms the outer suction passage 162 to apply additional suction to the glass plate 6, which ensures the glass plate 6 is more stably held by suction without falling off.

Specifically, to ensure the suction effect of the outer suction passage 162, a distance between a bottom end of the skirt structure 16 and the first upper molding surface 111 is exemplarily greater than 0 and not more than 100 mm, and may specifically be 100 mm, 90 mm, 80 mm, 70 mm, 60 mm, 50 mm, 40 mm, 30 mm, 20 mm, 10 mm, 5 mm, etc. In this way, it is possible to avoid that an excessively large distance results in the suction force of the outer suction passage 162 failing to being fully applied to the glass plate 6, and avoid that an excessively small distance causes the glass plate 6 to protrude excessively downward beyond the bottom end of the skirt structure 16 and thus be prone to deformation. The upper suction cavity 13 may be connected to a vacuum pump via an upper suction control structure 53, and the outer suction cavity 161 may be connected to a vacuum pump via an outer suction control structure 55, so as to control the suction parameters such as suction force and suction time of the upper suction cavity 13 and the outer suction cavity 161 respectively.

The number and the distribution positions of the pressure blowing cavities 12 may not be specifically limited, and may be set according to the preset deformation ranges of a plurality of positions on the glass plate 6.

As illustrated in FIGS. 8 and 10, in the embodiment of the present disclosure, in accordance with the middle region on the glass plate 6 and the inner region that is positioned between the middle region and the edge region. Therefore, in the embodiment of the present disclosure, the number of the pressure blowing cavities 12 is two, two pressure blowing cavities 12 include a first pressure blowing cavity 121 and a second pressure blowing cavity 122, and the plurality of pressure blowing holes 14 include a plurality of first pressure blowing holes 141 corresponding to the middle region of the glass plate 6 and a plurality of second pressure blowing holes 142. The plurality of first pressure blowing holes 141 are in communication with the first pressure blowing cavity 121 and are positioned above the middle region of the glass plate 6, and the plurality of second pressure blowing holes 142 are in communication with the second pressure blowing cavity 122 and are positioned above the inner region of the glass plate 6. By providing the first pressure blowing cavity 121 and the second pressure blowing cavity 122 to apply pressure blowing on different positions on the glass plate 6 respectively, and controlling the pressure blowing time and the pressure blowing force for different positions on the glass plate 6, the finally molded upper surface of the glass plate 6 is made to match the preset molded upper surface.

Specifically, the first pressure blowing cavity 121 is generally a circular concave cavity corresponding to the middle region of the glass plate 6, and the center of the circular concave cavity is corresponding to a deepest concave point of the preset molded upper surface of the glass plate 6. The first pressure blowing cavity 121 may be connected to an air supply device via a first pressure blowing control structure 51, and the second pressure blowing cavity 122 may be connected to an air supply device via a second pressure blowing control structure 52, so as to separately control the pressure blowing force and the pressure blowing time of the first pressure blowing cavity 121 and the second pressure blowing cavity 122 respectively.

In addition, in the present embodiment, it is also possible to control the distribution density of the pressure blowing holes 14 corresponding to the plurality of pressure blowing cavities 12, and/or the pressure blowing force and/or the pressure blowing time of the multiple pressure blowing cavities 12, such that the finally molded upper surface of the glass plate 6 matches the preset molded upper surface. For example, in the embodiment of the present disclosure, the preset deformation range of the middle region of the glass plate 6 is larger than that of the inner region; the pressure blowing force of the first pressure blowing cavity 121 is higher than that of the second pressure blowing cavity 122; and/or the pressure blowing time of the first pressure blowing cavity 121 is longer than that of the second pressure blowing cavity 122; and/or the distribution density of the first pressure blowing holes 141 is higher than that of the second pressure blowing holes 142.

Since the design of the pressure blowing cavity 12 is corresponding to the curvature distribution on the glass plate 6, under normal circumstances, a radius of curvature of the middle region of the glass plate 6 is larger and the center of gravity of the glass plate 6 is positioned in the middle region, thus a lower pressure blowing force is required. In contrast, the edge region of the glass plate 6 generally has a small radius of curvature and is far from the center of gravity, making it difficult for contacting with the second lower mold 3 under the action of its own gravity, thus a higher pressure blowing force is required. Specifically, the middle region of the glass plate 6 with a radius of curvature of more than 2000 mm is corresponding to the first pressure blowing cavity 121, wherein the shape and the size of the first pressure blowing cavity 121 can be set as required and are not limited to the circular shape in the present embodiment. The inner region of the glass plate 6 with a radius of curvature less than 2000 mm is corresponding to the second pressure blowing cavity 122.

As illustrated in FIGS. 8 to 10, in some embodiments of the present disclosure, the upper mold 1 includes a housing 17 and a sealing plate 18. The housing 17 is a cast body, and a plurality of partitioned inner cavities and openings of the respective inner cavities are provided on an upper surface of the housing 17. The plurality of partitioned inner cavities constitute at least one upper suction cavity 13 and at least one pressure blowing cavity 12, and the sealing plate 18 seals the openings. A lower surface of the housing 17 constitutes the upper molding surface 11. The skirt structure 16 is generally a cover structure, which is provided separately from the housing 17. The skirt structure 16 covers the outside of the housing 17.

Specifically, one end of the upper suction control structure 53 passes through the skirt structure 16 and extends into the outer suction cavity 161, and is in communication with the upper suction cavity 13 via an interface on the sealing plate 18. One end of the first pressure blowing control structure 51 passes through the skirt structure 16 and extends into the outer suction cavity 161, and is in communication with the first pressure blowing cavity 121 via the interface on the sealing plate 18. One end of the second pressure blowing control structure 52 passes through the skirt structure 16 and extends into the outer suction cavity 161, and is in communication with the second pressure blowing cavity 122 via the interface on the sealing plate 18.

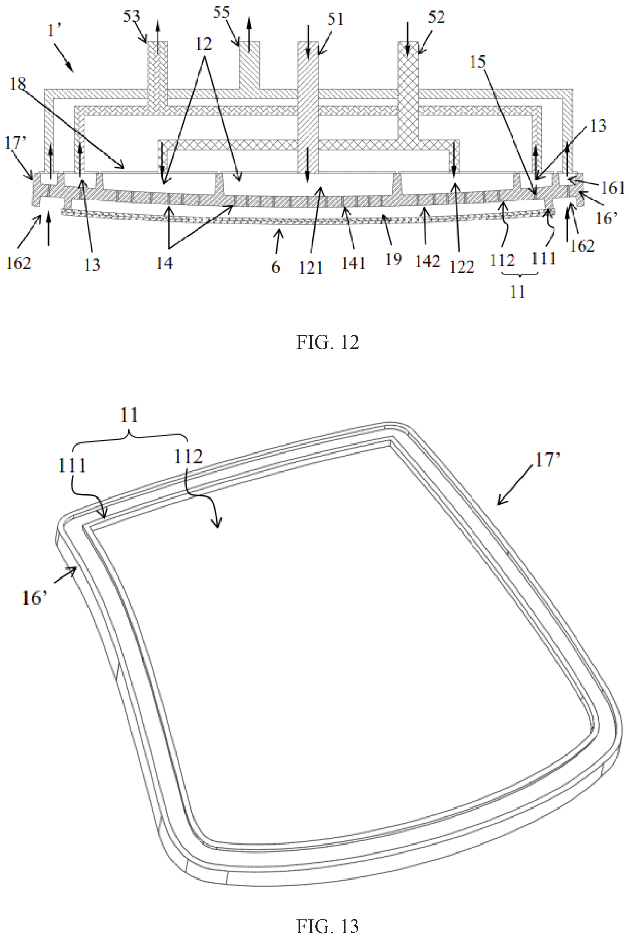

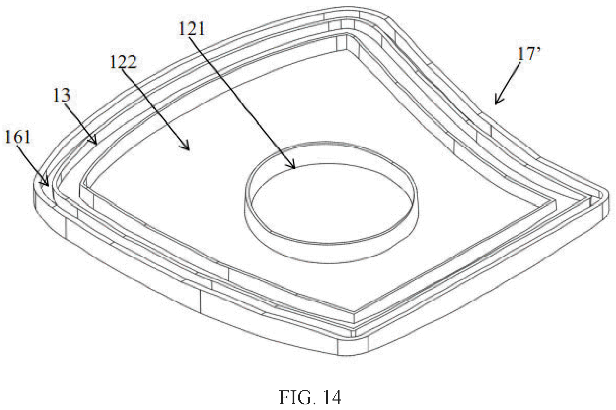

As illustrated in FIGS. 12 to 14, in some other embodiments of the present disclosure, an upper mold 1' includes a housing 17' and the sealing plate 18, and a skirt structure 16' is integrally molded on the housing 17'. A plurality of partitioned inner cavities and openings of the respective inner cavities are provided on an upper surface of the housing 17', and the plurality of partitioned inner cavities constitute the outer suction cavity 161, at least one upper suction cavity 13 and at least one pressure blowing cavity 12, with the sealing plate 18 sealing the openings. An upper molding surface 11 is provided on a lower surface of the housing 17'. An air suction duct on the housing 17', which is in communication with the outer suction cavity 161, constitutes the outer suction passage 162.

Specifically, one end of the upper suction control structure 53 passes through the skirt structure 16 and extends into the outer suction cavity 161, and is in communication with the upper suction cavity 13 via the interface on the sealing plate 18. One end of the first pressure blowing control structure 51 passes through the skirt structure 16 and extends into the outer suction cavity 161, and is in communication with the first pressure blowing cavity 121 via the interface on the sealing plate 18. One end of the second pressure blowing control structure 52 passes through the skirt structure 16 and extends into the outer suction cavity 161, and is in communication with the second pressure blowing cavity 122 via the interface on the sealing plate 18.

### Embodiment 2

As illustrated in FIGS. 2 to 4, the present disclosure further provides a method for molding a glass plate using a mold for molding a glass plate, wherein the method for molding a glass plate includes the following steps: placing a glass plate 6 on the first lower molding surface 21, and heating the glass plate 6 until the glass plate 6 is softened; conforming the upper molding surface 11 to the glass plate 6; holding, by the upper mold 1, the glass plate 6 by suction under the suction action of the suction cavity and transferring the glass plate 6 onto the second lower molding surface 31; and performing final molding of the glass plate 6 by cooperation of the upper mold 1 and the second lower mold 3. In the present embodiment, the specific structure, the working principle and the beneficial effects of the mold for molding a glass plate are the same as those of the mold for molding a glass plate in Embodiment 1, and thus will not be repeated here.

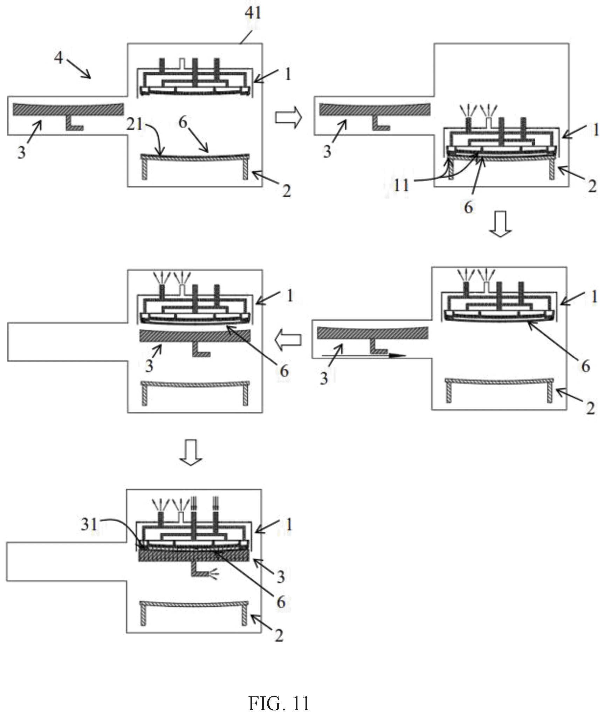

As illustrated in FIG. 11, in some embodiments of the present disclosure, the performing final molding of the glass plate 6 by cooperation of the upper mold 1 and the second lower mold 3 includes the following steps: sucking, by the lower suction cavity 32 and the upper suction cavity 13, the glass plate 6 through the lower suction holes and the upper suction holes 15, and applying, by the pressure blowing cavity 12, pressure blowing to the glass plate 6 through the pressure blowing holes 14, thereby achieving the final molding of the glass plate 6.

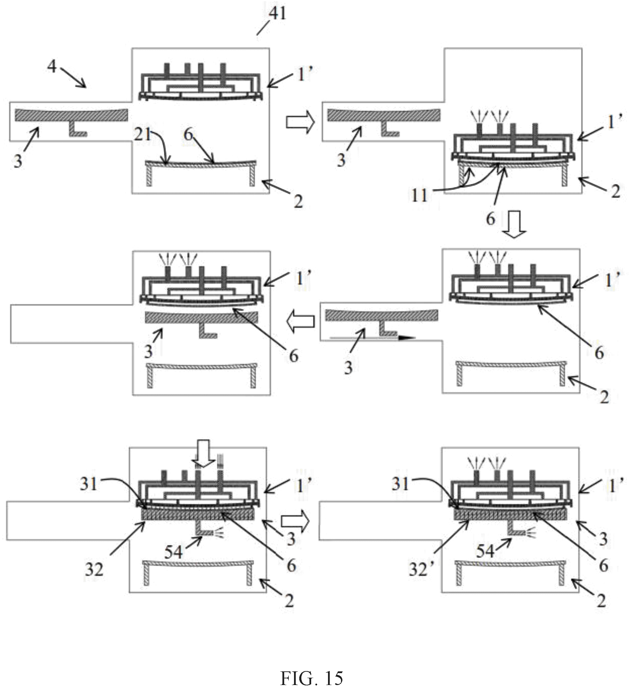

As illustrated in FIG. 15, in some embodiments of the present disclosure, the performing final molding of the glass plate 6 by cooperation of an upper mold 1' and the second lower mold 3 includes the following steps: during the process of conforming the glass plate 6 to the second lower molding surface 31, sucking and discharging air between the glass plate 6 and the second lower mold 3 through the lower suction cavity 32 until the glass plate 6 fully conforms to the second lower molding surface 31; injecting gas into the lower suction cavity 32 to convert the lower suction cavity 32 into a lower pressure blowing cavity 32', and meanwhile, in cooperation with the suction action of the upper suction cavity 13, achieving the final molding of the glass plate 6 under the action of vacuum suction from above and pressure blowing from below on the glass plate 6. The glass plate 6 can be better separated from the second lower mold 3 after the final molding.

In the embodiment of the present disclosure, the method for molding a glass plate further includes: setting the number, distribution positions, pressure blowing force and pressure blowing time of the pressure blowing cavities 12 according to preset deformation ranges of a plurality of positions on the glass plate 6.

In the embodiment of the present disclosure, the pressure blowing time is 0.5 seconds to 5 seconds.

### Embodiment 3

With reference to FIGS. 2 to 4, to facilitate the better implementation of the method for molding a glass plate according to the second embodiment, the present disclosure further provides a device for molding a glass plate, which includes a furnace body 4 and a mold for molding a glass plate, and the mold for molding a glass plate is capable of molding a glass plate 6 in the furnace body 4. In the present embodiment, the specific structure, the working principle and the beneficial effects of the mold for molding a glass plate are the same as those of the mold for molding a glass plate in Embodiment 1, and thus will not be repeated here.

In the embodiment of the present disclosure, the device for molding a glass plate further includes a conveying mechanism, which is capable of driving a first lower mold 2 to move along a conveying direction in the furnace body 4. Specifically, the conveying mechanism includes one or more conveying carriages, and one or more glass plates 6 may be placed on one conveying carriage.

In the embodiment of the present disclosure, the furnace body 4 has a heating section, a molding section 41, an annealing section and a cooling section arranged along the conveying direction, and the upper mold 1 and the second lower mold 3 are provided in the molding section 41. The conveying mechanism first drives the first lower mold 2 and the glass plate 6 placed thereon to move to the heating section, where the glass plate 6 is heated and softened to achieve preliminary molding; the conveying mechanism then drives the first lower mold 2 to move to the molding section 41, and the upper mold 1 holds the glass plate 6 on the first lower mold 2 by suction and transfers the same onto the second lower mold 3, such that the final molding of the glass plate is achieved by the cooperation of the upper mold 1 and the second lower mold 3. Thereafter, the upper mold 1 holds the glass plate 6 on the second lower mold 3 by suction and places the same onto the first lower mold 2, and the conveying mechanism further drives the first lower mold 2 to move to the annealing section and the cooling section in sequence for annealing and cooling of the glass plate 6.

Specifically, heating furnace wires are provided in the heating section, an annealing fan is provided in the annealing section, and one or more cooling fans are provided in the cooling section. The heating parameters for heating and softening the glass plate 6 in the heating section, the annealing parameters for annealing the molded glass plate 6 in the annealing section, and the cooling parameters for cooling the annealed glass plate in the cooling section are all the same as those in the prior art, and thus will not be repeated here.

To facilitate the better transfer of the glass plate 6, in the embodiment of the present disclosure, the device for molding a glass plate further includes a driving mechanism, which includes a first driving structure and a second driving structure. The upper mold 1 is mounted in the furnace body 4 via the first driving structure, and the second lower mold 3 is mounted in the furnace body 4 via the second driving structure. The first driving structure is capable of driving the upper mold 1 to move along a vertical direction, and the second driving structure is capable of driving the second lower mold 3 to move along a horizontal direction.

With reference to FIG. 11, in some embodiments of the present disclosure, after the glass plate 6 on the first lower mold 2 is heated and softened in the heating section to achieve preliminary molding, the conveying mechanism drives the first lower mold 2 to move to a position below the upper mold 1 in the molding section 41. The first driving structure then drives the upper mold 1 to move downward until the first upper molding surface 111 presses against the edge region of the glass plate 6 and holds the glass plate 6 by suction. Subsequently, the first driving structure drives the upper mold 1 to move upward to a height higher than that of the second lower mold 3, and then the second driving structure drives the second lower mold 3 to move horizontally to a position below the upper mold 1. Thereafter, the first driving structure drives the upper mold 1 to move downward until the lower surface of the glass plate 6 conforms to the first lower molding surface 21 of the second lower mold 3, and then the final molding of the glass plate 6 is achieved by the cooperation of the upper mold 1 and the second lower mold 3. After the final molding of the glass plate 6, the second driving structure drives the second lower mold 3 to move horizontally back to an initial position, and the first driving structure drives the upper mold 1 and the glass plate 6 held thereby to move downward until the lower surface of the glass plate 6 conforms to the first lower molding surface 21. After the upper mold 1 releases the glass plate 6, it moves upward back to an initial position.

With reference to FIG. 15, in some other embodiments of the present disclosure, during the process where the upper mold 1' moves downward until the lower surface of the glass plate 6 conforms to the second lower molding surface 31 of the second lower mold 3, the air between the glass plate 6 and the second lower mold 3 is sucked and discharged through the lower suction cavity 32 of the second lower mold 3, until the glass plate 6 fully conforms to the second lower molding surface 31 of the second lower mold 3. Then, air is injected into the lower suction cavity 32 to convert the lower suction cavity 32 into a lower pressure blowing cavity 32', and meanwhile, in cooperation with the suction action of the upper suction cavity 13 of the upper mold 1', the final molding of the glass plate 6 is achieved under the action of vacuum suction from above and pressure blowing from below on the glass plate 6. The glass plate 6 can be better separated from the second lower mold 3 after the final molding.

In the embodiments of the present disclosure, the device for molding a glass plate further includes a control mechanism, which includes at least one upper suction control structure 53, at least one lower suction control structure 54, at least one pressure blowing control structure and a driving control structure, wherein the at least one upper suction control structure 53 is in communication with the at least one upper suction cavity 13, the at least one lower suction control structure 54 is in communication with the at least one lower suction cavity 32, at least one pressure blowing control structure is in communication with at least one of the pressure blowing cavity 12, and the driving control structure is connected to the driving mechanism.

Those described above are just several embodiments of the present disclosure, and those skilled in the art can make various modifications or variations to the embodiments of the present disclosure according to the contents disclosed in the application documents without departing from the spirit and scope of the present disclosure.

## Claims

1. A mold for molding a glass plate, comprising:
an upper mold having an upper molding surface, at least one pressure blowing cavity and at least one upper suction cavity, wherein the upper molding surface is provided with pressure blowing holes in communication with the pressure blowing cavity and upper suction holes in communication with the upper suction cavity;
a first lower mold having a first lower molding surface;
a second lower mold having a second lower molding surface and a lower suction cavity, wherein the second lower molding surface is provided with lower suction holes in communication with the lower suction cavity.

2. The mold for molding a glass plate according to claim 1, wherein
the mold for molding the glass plate has a first operating state, a second operating state and a third operating state, wherein in the first operating state, a glass plate is placed on the first lower molding surface; in the second operating state, the upper molding surface at least partially conforms to an upper surface of the glass plate, and the upper suction cavity is in a suction state; and in the third operating state, the glass plate is placed on the second lower molding surface and positioned below the upper molding surface, the upper suction cavity and the lower suction cavity are both in a suction state, and the pressure blowing cavity is in a pressure blowing state.

3. The mold for molding a glass plate according to claim 1, wherein
the upper molding surface comprises a first upper molding surface, wherein the first upper molding surface is capable of conforming to an edge region of an upper surface of the glass plate, and the upper suction holes are provided on the first upper molding surface.

4. The mold for molding a glass plate according to claim 3, wherein
the upper molding surface further comprises a second upper molding surface, wherein the second upper molding surface is positioned on an inner side of the first upper molding surface; the pressure blowing holes are provided on the second upper molding surface, wherein the second upper molding surface is spaced apart from an upper surface of the glass plate, such that a gap between the second upper molding surface and the upper surface of the glass plate forms a pressure blowing space.

5. The mold for molding a glass plate according to claim 4, wherein a distance between the second upper molding surface and the upper surface of the glass plate is greater than 0 and not more than 200 mm.

6. The mold for molding a glass plate according to claim 1, wherein
the first lower molding surface conforms to an edge region of a preset molded lower surface of the glass plate, a cavity is provided on an inner side of the first lower molding surface; and the second lower molding surface is capable of conforming to the entire preset molded lower surface of the glass plate.

7. The mold for molding a glass plate according to claim 1, wherein
the upper mold further has a skirt structure, wherein the skirt structure has an outer suction cavity, and in a state where the glass plate conforms to the upper molding surface, the glass plate is at least partially positioned within the outer suction cavity, such that an annular space between the skirt structure and the glass plate forms an outer suction passage.

8. The mold for molding a glass plate according to claim 7, wherein a distance between a bottom end of the skirt structure and the first upper molding surface is greater than 0 and not more than 100 mm.

9. The mold for molding a glass plate according to claim 1, wherein
the number of the pressure blowing cavities is two, two pressure blowing cavities comprise a first pressure blowing cavity and a second pressure blowing cavity, and a plurality of the pressure blowing holes comprise a plurality of first pressure blowing holes and a plurality of second pressure blowing holes, wherein the plurality of first pressure blowing holes are in communication with the first pressure blowing cavity and are positioned above a middle region of the glass plate, and the plurality of second pressure blowing holes are in communication with the second pressure blowing cavity and are positioned above an inner region of the glass plate.

10. The mold for molding a glass plate according to claim 9, wherein
a preset deformation range of the middle region is larger than that of the inner region;
a pressure blowing force of the first pressure blowing cavity is higher than that of the second pressure blowing cavity; and/or
a pressure blowing time of the first pressure blowing cavity is longer than that of the second pressure blowing cavity; and/or
a distribution density of the first pressure blowing holes is higher than that of the second pressure blowing holes.

11. The mold for molding a glass plate according to claim 7, wherein the upper mold further comprises a housing and a sealing plate, an upper surface of the housing is provided with a plurality of partitioned inner cavities and openings of the respective inner cavities, the plurality of partitioned inner cavities constitute at least one upper suction cavity and at least one pressure blowing cavity, and the sealing plate seals the openings;
a lower surface of the housing is provided with the upper molding surface;
wherein the skirt structure is integrally formed on the housing, and an air suction duct on the housing, which is in communication with the outer suction cavity, constitutes the outer suction passage; or,
the skirt structure is provided separately from and covers the outside of the housing.

12. A method for molding a glass plate, wherein the method for molding a glass plate uses the mold for molding a glass plate according to any one of claims 1 to 11, and comprises the following steps:
placing a glass plate on the first lower molding surface, and heating the glass plate until the glass plate is softened;
conforming the upper molding surface to the glass plate;
holding, by the upper mold, the glass plate by suction under a suction action of the suction cavity, and transferring the glass plate onto the second lower molding surface;
performing final molding of the glass plate by cooperation of the upper mold and the second lower mold.

13. The method for molding a glass plate according to claim 12, wherein the performing final molding of the glass plate by cooperation of the upper mold and the second lower mold comprises the following steps:
sucking, by the lower suction cavity and the upper suction cavity, the glass plate through the lower suction holes and the upper suction holes, and applying, by the pressure blowing cavity, pressure blowing to the glass plate through the pressure blowing holes, thereby achieving the final molding of the glass plate; or
during the process of conforming the glass plate to the second lower molding surface, sucking and discharging air between the glass plate and the second lower mold through the lower suction cavity until the glass plate fully conforms to the second lower molding surface;
injecting gas into the lower suction cavity to convert the lower suction cavity into a lower pressure blowing cavity, and meanwhile, in cooperation with a suction action of the upper suction cavity, achieving the final molding of the glass plate under an action of vacuum suction from above and pressure blowing from below on the glass plate.

14. The method for molding a glass plate according to claim 13, further comprising: setting the number, distribution positions, pressure blowing force and pressure blowing time of the pressure blowing cavities according to preset deformation ranges of a plurality of regions on the glass plate.

15. The method for molding a glass plate according to claim 14, wherein
the pressure blowing time is 0.5 seconds to 5 seconds.

16. A device for molding a glass plate, comprising a furnace body and the mold for molding a glass plate according to any one of claims 1 to **11,** wherein the mold for molding a glass plate is capable of molding the glass plate in the furnace body.

17. The device for molding a glass plate according to claim 16, wherein
the device for molding a glass plate further comprises a conveying mechanism, wherein the conveying mechanism is capable of driving the first lower mold to move along a conveying direction in the furnace body.

18. The device for molding a glass plate according to claim 17, wherein
the furnace body has a heating section, a molding section, an annealing section and a cooling section arranged along the conveying direction, and the upper mold and the second lower mold are provided in the molding section.

19. The device for molding a glass plate according to claim 16, wherein
the device for molding a glass plate further comprises a driving mechanism, wherein the driving mechanism comprises a first driving structure and a second driving structure, the upper mold is mounted in the furnace body via the first driving structure, the second lower mold is mounted in the furnace body via the second driving structure, the first driving structure is capable of driving the upper mold to move along a vertical direction, and the second driving structure is capable of driving the second lower mold to move along a horizontal direction.

20. The device for molding a glass plate according to claim 19, wherein
the device for molding a glass plate further comprises a control mechanism, wherein the control mechanism comprises at least one upper suction control structure, at least one lower suction control structure, at least one pressure blowing control structure and a driving control structure, wherein the at least one upper suction control structure is in communication with the at least one upper suction cavity, the at least one lower suction control structure is in communication with the at least one lower suction cavity, the at least one pressure blowing control structures is in communication with the at least one pressure blowing cavity, and the driving control structure is connected to the driving mechanism.
